# EUROPÄISCHE PATENTSCHRIFT

(11) **EP 2 028 392 B1**
(45) Veröffentlichungstag und Bekanntmachung des Hinweises auf die Patenterteilung: **15.12.2010**
(21) Anmeldenummer: 08006829.9
(22) Anmeldetag: 04.04.2008
(51) Int. Cl.: F16F 13/26, F16F 13/10

(54) **Hydrolager mit magnetisch betätigbarer Membran**
Hydraulic support with a magnetically activated membrane
Couche hydraulique dotée d'une membrane à actionnement magnétique

(30) Priorität: 22.08.2007 DE 102007039688
(43) Veröffentlichungstag der Anmeldung: 25.02.2009
(73) Patentinhaber: Carl Freudenberg KG, 69469 Weinheim (DE)
(72) Erfinder: Winkler, Gerold, Verstorben (DE)

(56) Entgegenhaltungen:
- EP-A- 1 443 240
- DE-A1- 19 833 458
- FR-A- 2 774 734
- JP-A- 9 291 966

## Beschreibung

### Technisches Gebiet

Die Erfindung betrifft ein Hydrolager gemäß dem Oberbegriff des Patentanspruchs 1.

### Stand der Technik

Derartige Hydrolager sind aus dem Stand der Technik bereits bekannt. Beispielsweise ist aus der EP 1 443 240 A1 ein elektrisch schaltbares Hydrolager bekannt, bei welchem ein Elektromagnet den Luftdruck hinter einer Membran regelt. Hierbei ist nachteilig, dass zur Taktung des Hydrolagers ein Vakuum erforderlich ist. Ein pneumatisch arbeitendes Hydrolager ist zur Taktung nicht besonders geeignet, da Luft eine Kompressibilität zeigt und der Taktvorgang daher relativ träge verläuft.

Des Weiteren sind aufwändige Vorrichtungen wie Leitungen, Ventile und Sicherheitseinrichtungen beim Aufbau eines pneumatisch arbeitenden Hydrolagers notwendig. Hiermit sind erhebliche Kosten verbunden.

Bei einem Kraftfahrzeug wird eine Entkopplung der auftretenden Schwingungen nicht nur im Leerlauf des Motors, sondern auch in einem Frequenzbereich oberhalb des Leerlaufs angestrebt. Die bekannten Hydrolager sind nur wenig geeignet, im Frequenzbereich des Fahrbetriebs eine Schwingungsdämpfung zu erzielen und zugleich durch eine Taktung des Hydrolagers eine sehr hohe Steifigkeitsabsenkung des Hydrolagers im Leerlauf zu bewirken.

Aus der FR 2 774 734 A ist ein Hydrolager bekannt, bei welchem an einem ferromagnetischen Betätigungselement ein Kolben und eine Membran aus einem Elastomer angeordnet sind.

### Darstellung der Erfindung

Der Erfindung liegt daher die Aufgabe zugrunde, ein Hydrolager der eingangs genannten Art derart weiterzubilden und auszugestalten, dass bei einfachem konstruktivem Aufbau und kostengünstiger Fertigung ein flexibler Einsatz realisierbar ist.

Die vorliegende Erfindung löst die zuvor genannte Aufgabe durch die Merkmale des Patentanspruchs 1. Danach ist die Membran zumindest teilweise aus einem magnetisierbaren Elastomer gefertigt.

Erfindungsgemäß ist erkannt worden, dass ein Hydrolager, welches mit einer durch Magnetkraft betätigbaren Membran ausgestattet ist, problemlos elektromagnetisch getaktet werden kann. Ganz konkret ist erkannt worden, dass die Membran durch einen Elektromagneten bewegt werden kann.

Die Bewegung der Membran kann abhängig von der Rotordrehzahl eines Kraftfahrzeugs über eine elektronische Schalteinrichtung derart gesteuert werden, dass das Fluid von der Federanordnung beziehungsweise vom ersten Raum weggezogen wird. Dies kann dadurch realisiert werden, dass die Membran durch Magnetkraft in Richtung des weiteren Raums gezogen wird. Hierdurch entsteht ein Unterdruck im ersten Raum, so dass sich das Hydrolager weicher verhält, als es die Federanordnung alleine vorgibt. Erfindungsgemäß ist insbesondere erkannt worden, dass durch eine elektromagnetisch betätigbare Membran eine starke Absenkung der dynamischen Steifigkeit des Hydrolagers realisierbar ist

Schließlich ist erkannt worden, dass eine durch Magnetkraft betätigbare Membran drehzahlabhängig angesteuert werden kann. Dies ist insbesondere vorteilhaft während der Warmlaufphase des Motors eines Kraftfahrzeugs oder bei sich ändernden Leerlaufdrehzahlen, die durch Zu- oder Abschaltung von Nebenaggregaten bewirkt werden. In Kraftfahrzeugen finden die Nebenaggregate Generator, Klimaanlage, Arbeitshydraulik oder Niveauregulierung Verwendung. Ein Hydrolager, welches eine durch Magnetkraft betätigbare Membran aufweist, reagiert im Gegensatz zu pneumatisch getakteten Hydrolagern gerade nicht träge. Daher können Schwingungen des Motors phasenrichtig derart abgestimmt werden, dass sie stets auf einen weichen Hydrolagerzustand treffen. Insoweit ist das erfindungsgemäße Hydrolager flexibel einsetzbar.

Die Membran ist zumindest teilweise aus einem magnetisierbaren Elastomer gefertigt. Durch diese konkrete Ausgestaltung ist es möglich, im Hydrolager eine einzige Membran anzuordnen und einen bauteilearmen Aufbau zu realisieren. Bei der Verwendung einer solchen Membran würden nur einzelne Bereiche der Membran mit einem Elektromagneten bzw. einer Spule in Wechselwirkung treten. Das magnetisierbare Elastomer könnte magnetisierbare Partikel enthalten, hierdurch können in dem Elastomer magnetische Pole ausgerichtet werden.

Folglich ist die genannte Aufgabe gelöst.

In die Membran könnte zumindest ein Metallteil zumindest teilweise eingebettet sein. Durch diese konkrete Ausgestaltung wird ein fester Verbund zwischen dem Metallteil und der Membran hergestellt. Ganz konkret ist denkbar, dass das oder die Metallteile in die Membran an- oder einvulkanisiert sind. Ein Metallteil ist dann anvulkanisiert, wenn es von der Membran nicht vollständig umschlossen ist. Vor diesem Hintergrund ist denkbar, dass die Membran aus einem Elastomer gefertigt ist, welches sich für die Vulkanisierung eignet. Ganz konkret ist vor diesem Hintergrund denkbar, dass in die Membran ein magnetisierbarer Ring einvulkanisiert ist. Der Ring könnte als Rückschlussring ausgestaltet sein, der mit einer oder mehreren Spulen wechselwirkt, die ein magnetisches Feld erzeugen. Die Verwendung eines Rings erlaubt eine besonders gute Anbindung der Membran an das Magnetfeld, welches von den Spulen erzeugt wird. Der Ring könnte mit einem dünnen Gummiüberzug versehen sein, um Anschlaggeräusche des Rings an den Spulen oder an Widerlagern zu vermeiden. Vor diesem Hintergrund ist konkret denkbar, dass der Ring mit einem Elektrotopfmagnet wechselwirkt, in dem eine Spule eingebettet ist. Dabei dient der Topf als Widerlager für den Ring. Durch diese konkrete Ausgestaltung können sehr hohe Haltekräfte erzeugt werden, wenn nämlich die Membran am Widerlager gehalten wird. Hierdurch kann eine sehr hohe Dämpfungswirkung des Hydrolagers erzeugt werden, weil sich die Membranfläche, die am Widerlager gehalten wird, nicht mehr bewegen lässt.

Das Metallteil könnte als Magnetanker ausgestaltet sein. Die Verwendung eines Magnetankers erlaubt eine gute axiale Führung der Membran, wobei die Membran nahezu keinen Verkippungen unterliegt. Der Magnetanker könnte mit der Membran zur festen Verbindung durch eine Vulkanisierung verbunden sein. Der Magnetanker könnte mit einem Elektromagneten derart wechselwirken, dass der Elektromagnet den Anker immer dann anzieht, wenn er mit Strom versorgt wird. Vor diesem Hintergrund ist denkbar, dass die Stromversorgung des Elektromagneten mit der zu dämpfenden Motorschwingung korreliert ist.

Dabei könnte die Schwingung der Membran der Motorschwingung in der Phase voreilen und daher besonders weich wirken, um die Motorschwingung gut zu dämpfen.

Vor diesem Hintergrund ist denkbar, dass die Magnetkraft durch eine Spule elektromagnetisch erzeugt ist. Spulen stellen besonders zuverlässige Elektromagneten dar. Sie zeigen eine geringe Trägheit und können dadurch hohe Taktfrequenzen des Hydrolagers realisieren.

Die Membran könnte gegen die Kraft einer Feder bewegbar sein. Vor diesem Hintergrund ist denkbar, dass die Feder als Spiralfeder ausgestaltet ist. Spiralfedern zeichnen sich durch eine hohe Stabilität und problemlos auswählbare Federkonstante aus.

Im Hydrolager könnten Mittel zur Bildung eines Kanals vorgesehen sein, der als Führung einer Fluidmenge vom ersten Raum in den weiteren Raum fungiert. In Verbindung mit der Federanordnung kann die Fluidmasse als solche zur Tilgung von Schwingungen verwendet werden. Dies kann besonders effektiv durch eine schwingende Fluidsäule realisiert werden. Die Masse dieser Fluidsäule kann durch konstruktive Ausgestaltung des Kanals beeinflusst werden. Hierdurch ist ein flexibler Einsatz des Hydrolagers realisierbar, da das Schwingungsverhalten der Federanordnung und der Fluidmasse auf die Bewegung der magnetisch betätigbaren Membran abstimmbar ist.

Ein Teil der Membran könnte zu den Mitteln gehören, die den Kanal bilden. Dieser Teil könnte zwar aus einem Elastomer bestehen, aber aufgrund seiner Starre nur ganz unwesentlich oder gar nicht durch die Fluidsäule gedehnt werden. Dieser Teil der Membran kann den Kanal verlängern, ohne weitere Bauteile vorzusehen.

Die Mittel, welche den Kanal bilden, könnten konzentrisch zum Kanal angeordnet sein. Diese konkrete Ausgestaltung erlaubt die Bildung einer Fluidsäule, welche sich herstellungsbedingt in einer Richtung verjüngt. Hierdurch ist beispielsweise denkbar, eine Übersetzungswirkung im Sinne eines Wagenheberprinzips zu realisieren. Denkbar ist beispielsweise, dass die Fluidsäule an ihrem oberen Ende einen größeren Querschnitt aufweist als an ihrem unteren Ende. Insoweit ist es möglich, auf die flexible Membran, welche sich sackartig in mindestens einen weiteren Raum erstreckt, über den Fluiddruck eine besonders hohe Kraft auf eine Federanordnung auszuüben. Dabei ist denkbar, dass die Mittel, welche den Kanal bilden, als Trennwände ausgebildet oder Teile von Trennwänden oder einer einzelnen Trennwand sind. Dies ermöglicht einen stabilen und konstruktiv einfachen Aufbau des Hydrolagers.

Denkbar ist auch, dass der Kanal exzentrisch zu den Mitteln angeordnet ist. Diese Ausgestaltung ist sinnvoll, wenn der Dämpfungskanal als Düse und Diffusor gegeneinandergeschaltet ist oder der Kanal in nicht runden Hydrolagern ausgebildet ist.

Die Mittel könnten als zylindrische Segmente ausgebildet sein. Denkbar ist hierbei, dass der Kanal durch Segmente gebildet wird, welche ein Rohr definieren. Dabei ist insbesondere denkbar, dass die einzelnen Segmente aneinander stoßen und im Bereich der Stoßstellen durch eine Membran gegen weitere Räume abgedichtet sind. Hierdurch ist realisiert, dass die Fluidsäule innerhalb des Kanals nicht in weitere Räume ausweichen kann, sondern sich direkt in den Raum erstreckt, welcher mit der Kammer kommuniziert, und als quasi kompakte Masse schwingen kann.

Die Mittel könnten eine Stützwandung umfassen, an die sich die Membran anlegen kann. Diese konkrete Ausgestaltung realisiert vorteilhaft, dass der weitere Raum, welcher als Tilgerkammer fungiert, räumlich klar definiert wird. Dabei ist insbesondere denkbar, dass die Stützwandung einstückig mit einem Boden ausgebildet ist, an welchen die Membran anlegbar ist. Diese Ausgestaltung ist im Hinblick auf eine lange Lebensdauer der flexiblen Membran von Vorteil, da diese nur definiert und in vergleichsweise geringem Maß gedehnt werden kann. Insoweit stellen die Stützwandung und der Boden begrenzende Elemente dar, welche die Überdehnung der Membran verhindern.

Die Mittel könnten einen Dämpfungskanal umfassen oder mit einem Dämpfungskanal wirkverbunden sein. Dabei ist denkbar, dass der Dämpfungskanal konzentrisch um den Kanal, welcher als Tilgerkanal fungiert, angeordnet ist. Der Dämpfungskanal erlaubt den Durchtritt des Fluids aus dem ersten Raum in einen Raum, der sich an den ersten Raum anschließt. Der Dämpfungskanal beeinflusst je nach seiner geometrischen Ausgestaltung die dynamische Steifigkeit des Hydrolagers. Werden die Durchgänge im Dämpfungskanal sehr klein gewählt, so wirkt die Dämpfung bei niedrigen Frequenzen und das Lager verhält sich oberhalb einer Frequenz maximaler Dämpfung als verhärtendes Lager, da die Fluidmasse im Kanal zu träge ist.

Der Dämpfungskanal könnte vor diesem Hintergrund als Doppeistockkanal mit einer Membranteilung ausgebildet sein. Die Membran innerhalb des Dämpfungskanals erhöht die Dämpfungswirkung des Dämpfungskanals bei größeren Amplituden auf der Seite des Hydrolagers, welche durch Schwingungen angeregt wird.

Der als Tilgerkanal fungierende Kanal, in welchem die Fluidsäule geführt wird, könnte mittig angeordnet sein. Dabei ist insbesondere denkbar, dass der Kanal koaxial zur Hydrolagerachse angeordnet ist. Diese konkrete Ausgestaltung erlaubt eine direkte Übertragung der am Hydrolager angreifenden Kräfte auf die Fluidsäule. Insoweit ist die Tilgungswirkung der Fluidmasse innerhalb der Fluidsäule optimal ausgenutzt, da die träge Masse der Fluidsäule direkt mit einem axial angeordneten Anschlusselement wechselwirken kann.

Der Kanal könnte eine Tiefe aufweisen, die größer ist als dessen Breite. Diese konkrete Ausgestaltung ist von Vorteil, wenn man eine besonders lange Fluidsäule realisieren möchte, um im Leerlauf des Motors Frequenzen im Bereich unterhalb 80 Hz zu tilgen. Vor diesem Hintergrund ist auch denkbar, die Breite des Kanals so zu wählen, dass diese größer ist als dessen Tiefe. Diese konkrete Ausgestaltung ist zur Unterdrückung von Frequenzen im Bereich von z.B. 150 Hz von Vorteil.

Dem Kanal könnte ein hornartiger Einlaufbereich zugeordnet sein. Der hornartige Einlaufbereich dient der Reduktion des Strömungswiderstandes und zur Verstärkung eines Tilgereffekts, wenn das Fluid vom ersten Raum in den weiteren Raum einströmt.

Die Federanordnung könnte ein Elastomer umfassen, welches einen durch dessen Federeigenschaften vergrößerbaren und verkleinerbaren ersten Raum, nämlich die Arbeitskammer, begrenzt. Dabei ist insbesondere denkbar, dass das Elastomer am oberen Ende oder unteren Ende des Hydrolagers angeordnet ist und ein Anschlusselement aufnimmt. Das Anschlusselement könnte an das Elastomer anvulkanisiert sein, wobei das Elastomer selbst an das Gehäuse des Elastomers anvulkanisiert sein könnte. Diese konkrete Ausgestaltung erlaubt die Nutzung der elastischen Eigenschaften des Elastomers zur Isolation in einem speziellen Frequenzbereich. An den ersten Raum, welcher vom Elastomer begrenzt wird, könnte sich ein zweiter mit Fluid befüllter Raum anschließen. Hierdurch ist realisierbar, dass bei Kraftbeaufschlagung des Elastomers das Fluid von einem ersten Raum in einen zweiten Raum strömen kann. Es gibt eine Reihe von Konstruktionen, in denen eine Gummifeder unten angeordnet ist und mit der Karosserie verbunden ist. Dabei wird ein Hilfsrahmen als Teil der Karosserie benutzt. Der Grund hierfür ist, dass günstigere Temperaturverhältnisse, ein besseres Schwingungsverhalten und eine einfachere Montage des Fahrzeugs realisierbar sind.

Dieser zweite Raum könnte durch eine zweite zumindest teilweise flexible Membran begrenzt sein. Diese zweite flexible Membran könnte als Rollbalg zur Fluidaufnahme ausgestaltet sein. Der Rollbalg könnte sich in eine Ausgleichskammer oder in einen nach unten offenen Raum erstrecken. Diese konkrete Ausgestaltung erlaubt die Aufnahme eines Fluids, welches vom ersten Raum in den zweiten Raum strömt.

Die erste Membran, welche sich von der Arbeitskammer aus erstreckt, und die zweite Membran, welche als Rollbalg ausgebildet sein könnte, könnten einstückig ausgebildet sein. Eine solche Ausgestaltung ist im Hinblick auf eine kostengünstige Fertigung des Hydrolagers von Vorteil. Des Weiteren hat diese Ausgestaltung den Vorteil, dass Dichtungsmaßnahmen zwischen dem oberen Teil des Hydrolagers und dem unteren Teil minimiert werden.

Durch eine Schalteinrichtung könnten vier Betriebszustände des Hydrolagers einstellbar sein. In einem ersten Betriebszustand wird der Elektromagnet stromlos geschaltet. In diesem Zustand hat die Membran durch einen Spalt zwischen der Membran und einem Widerlager Spiel. Bei größeren Amplituden stützt sich die Membran auf dem Widerlager ab. Die Folge ist dann eine höhere Dämpfung. In einem zweiten Betriebszustand ist der Elektromagnet ebenfalls stromlos. Durch die geometrische Ausgestaltung des Kanals kann die im Kanal schwingende Fluidmenge eingestellt werden. Die Dämpfungs- und Tilgungseigenschaften des Hydrolagers ergeben sich aus der Steifigkeit der Membran, der Federanordnung sowie der Geometrie des Kanals. In einem dritten Betriebszustand kann der Elektromagnet mit Strom versorgt werden. Bei Verwendung eines Gleichstroms wird die Membran durch eine Magnetkraft gegen den Elektromagneten gezogen. Dieser Betriebszustand eignet sich, um eine hohe Tilgungswirkung zu erzielen. In einem vierten Betriebszustand wird der Elektromagnet mit Wechselstrom betrieben. Dabei schwingt die Membran entsprechend der Wechselstromfrequenz. In diesem Betriebszustand kann die Tilgungswirkung des zweiten Betriebszustandes verstärkt werden, indem nämlich die schwingende Fluidmenge auf die Wechselstromfrequenz abgestimmt wird. Wenn nun die Tilgungseigenfrequenz des Hydrolagers und die Wechselstromfrequenz übereinstimmen, wird der Tilgungseffekt des Hydrolagers sehr stark erhöht, so dass Motorschwingungen in effektiver Weise getilgt werden können.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: ein Hydrolager mit einer Membran, die durch Magnetkraft bewegbar ist,
- Fig. 2: ein Hydrolager, bei dem die erste Membran und die zweite Membran einstückig ausgebildet sind,
- Fig. 3: ein Hydrolager, bei dem in die Membran ein Ring eingebettet ist,
- Fig. 4: ein Hydrolager, bei der der Kanal durch ein Rohr gebildet wird,
- Fig. 5: ein Hydrolager mit einem kurzen Kanal und
- Fig. 6: ein Hydrolager, bei dem in die Membran ein Magnetanker eingebettet ist.

### Ausführung der Erfindung

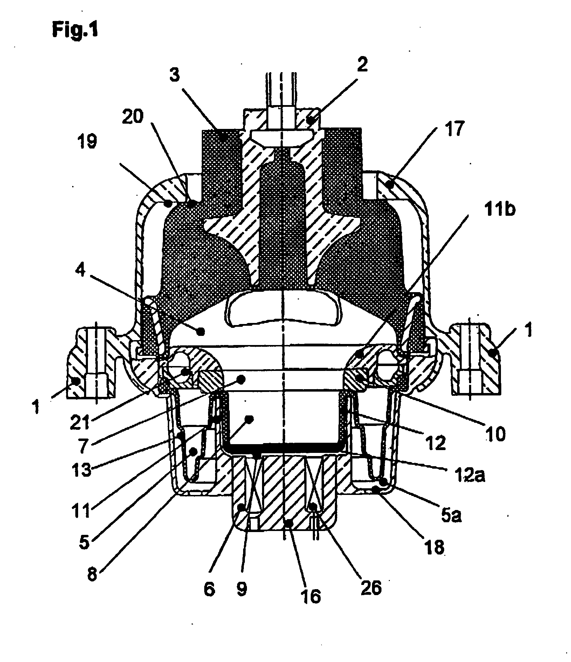

Fig. 1 zeigt ein Hydrolager mit Anschlusselementen 1, 2, welche mittels einer Federanordnung 3 federnd und relativ beweglich zueinander angeordnet sind. Die Federanordnung ist ein Elastomer 3, welches einen ersten Raum 4, nämlich die Arbeitskammer, nach oben begrenzt. An den Raum 4, welcher mit Fluid befüllt ist, schließt sich ein zweiter Raum 5 an.

Koaxial zur Längsachse des Hydrolagers ist ein Kanal 7 ausgebildet, welcher der Führung einer Fluidmenge vom ersten Raum 4 in einen weiteren Raum 8 dient, welcher mit einer Schaltkammer 9 kommuniziert. Der Kanal 7 wird durch Mittel 10 und 11 gebildet, welche Teile einer Trennwand oder separater Trennwände sind.

In den Raum 8, welcher mit der Schaltkammer 9 kommuniziert, erstreckt sich sackartig eine teilweise flexible erste Membran 12. Die erste Membran 12 ist einstückig mit einer zweiten zumindest teilweise flexiblen Membran 13 verbunden, welche als Rollbalg ausgestaltet ist und den Raum 5 nach unten begrenzt. Die zweite Membran 13 ragt in eine luftgefüllte Gehäusekammer 5a. Das Hydrolager weist ein Gehäuseoberteil 17 und ein Gehäuseunterteil 18 auf.

Das Gehäuseoberteil 17 bildet einen Anschlag 19 für die Federanordnung 3 aus. Die Federanordnung 3 weist einen Rand 20 auf, der am Anschlag 19 anliegt. Durch diese Ausgestaltung kann das Gehäuseoberteil 17 eine Anschlagsfunktion ausüben, wenn die Federanordnung 3 deformiert wird.

Die Mittel 10 und 11 sind konzentrisch zum Kanal 7 angeordnet und als im Wesentlichen zylindrische Segmente ausgebildet. Das Mittel 11 ist als Stützwandung ausgebildet, an die sich die Membran 12 anlegen kann. Das Mittel 10 ist als Dämpfungskanal 21 ausgebildet.

Der Kanal 7 dient als Führung einer Fluidmenge vom ersten Raum 4 in den weiteren Raum 8, welcher mit der Schaltkammer 9 kommuniziert.

Die Membran 12 ist durch Magnetkraft bewegbar. Die Membran 12 ist zumindest teilweise aus einem magnetisierbaren Elastomer gefertigt. Dabei ist die Membran 12 mit der zweiten Membran 13 einstückig ausgebildet. Der Membranabschnitt 12a und die Membran 13 sind aus unterschiedlichen Elastomeren gefertigt. Die einteilige Fertigung kann in einem Zweikomponenten-Vulkanisationsverfahren erfolgen, welches schnell und kostengünstig durchführbar ist.

In einem geringen Abstand zu dem magnetisierbaren Membranabschnitt 12a ist ein topfartig ausgestalteter Elektromagnet 6 angeordnet, der eine Spule 26 aufweist. Der topfartig ausgestaltete Elektromagnet 6 bildet für die Membran 12 ein Widerlager, an dem sich die Membran 12 anlegen kann. Der Elektromagnet 6 nimmt die Spule 26 in einem Gehäuse 16 auf, welches als Widerlager für die Membran 12 dient. Der Elektromagnet 6 ist mit einer elektronischen Schalteinrichtung 15 verbunden, durch welche vier Betriebszustände des Hydrolagers einstellbar sind. Diese vier Betriebszustände wurden in der Beschreibungseinleitung bereits erläutert.

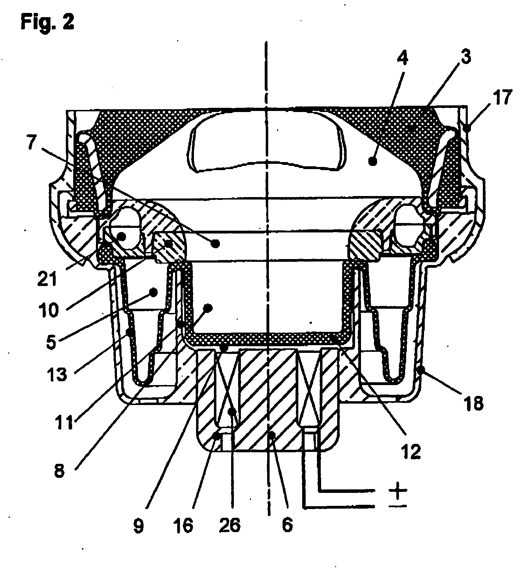

Fig. 2 zeigt ein Hydrolager, welches sich vom Hydrolager gemäß Fig. 1 dadurch unterscheidet, dass die erste Membran 12 und die zweite Membran 13 einstückig aus einem magnetisierbaren Elastomer gefertigt sind. Im Gegensatz zum Hydrolager gemäß Fig. 1 weist die einstückige Membran 12, 13 keine materialunterschiedlichen Bereiche auf. Eine solche Membran ist günstiger in der Herstellung.

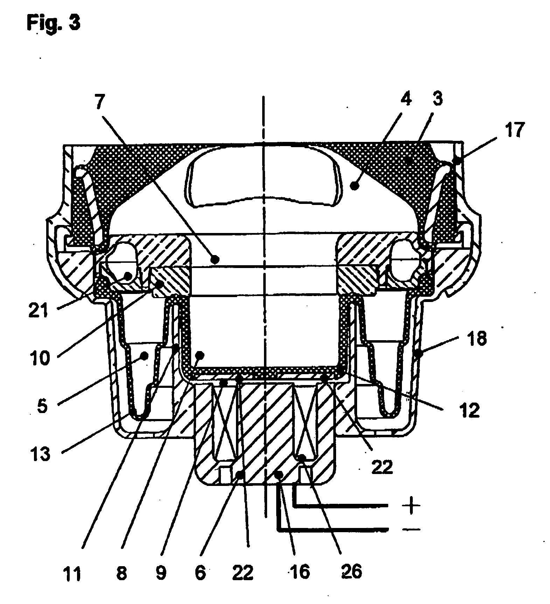

Fig. 3 unterscheidet sich vom Hydrolager gemäß Fig. 1 dadurch, dass in die einstückig Membran 12, 13 ein Metallteil 22, nämlich ein Ring eingebettet ist, der als Rückschlussring fungiert. Der Rückschlussring wirkt mit dem von der Spule 26 erzeugten Magnetfeld zusammen. Der Ring ist an den Membranabschnitt, der dem topfartigen Elektromagneten 6 zugewandt ist, anvulkanisiert. Das Gehäuse 16 dient dem Ring als Widerlager. Dieses Ausführungsbeispiel hat den Vorteil, dass die Membran 12, 13 aus besonders preiswertem Elastomer gefertigt werden kann, welches nur den Ring aufnehmen muss.

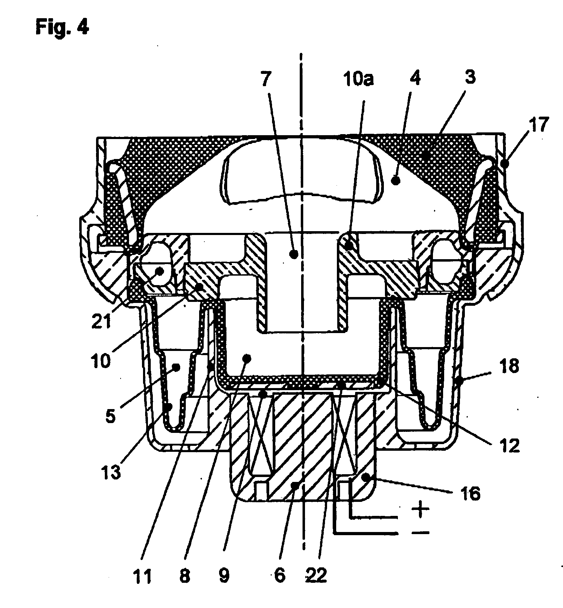

Fig. 4 zeigt ein Hydrolager, welches sich vom Hydrolager gemäß Fig. 3 dadurch unterscheidet, dass im Kanal 7 ein Rohr 10a angeordnet ist. Das Rohr 10a ist als Teil einer so genannten Düsenscheibe 10 ausgebildet. Durch das Rohr 10a kann der Kanal 7 modifiziert werden. Hierdurch ist eine Anpassung des Hydrolagers an verschiedene Motortypen realisierbar.

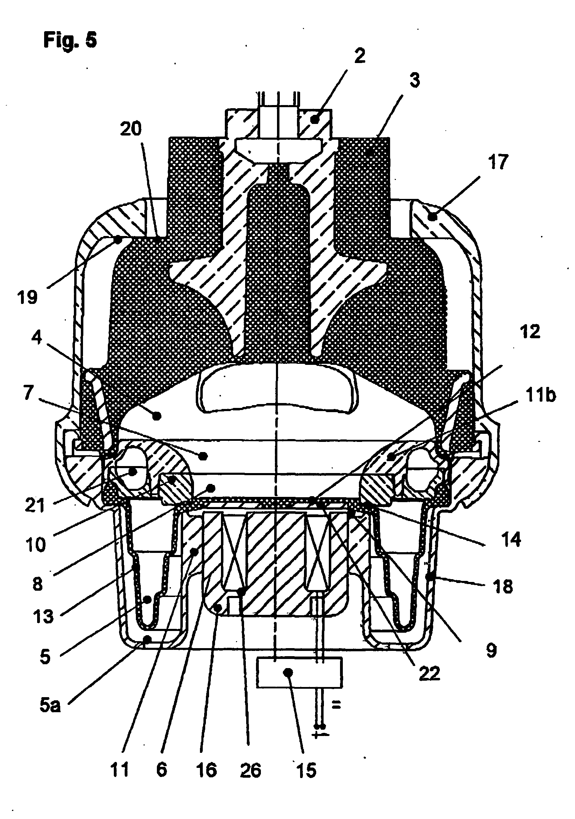

Fig. 5 zeigt ein Hydrolager mit einem hornartigen Einlaufbereich 11 b. Der homartige Einlaufbereich 11 b dient der Reduktion des Strömungswiderstandes und zur Verstärkung eines Tilgereffekts, wenn das Fluid vom ersten Raum 4 in den weiteren Raum 8 einströmt. Der weitere Raum 8 ist im Hydrolager gemäß Fig. 5 nicht besonders tief ausgebildet. An die Membran 12 ist ein Ring 22 anvulkanisiert, wie dies in den Figuren 3 und 4 beschrieben ist. Zwischen dem zylindrischen Segment 10 und der Stützwandung 11 bildet die einstückig ausgebildete Membran 12, 13 einen Federabschnitt 14 aus, der dem Hydrolager eine vertikale Elastizität verleiht. Die erste Membran 12 und die zweite Membran 13 sind im Hydrolager gemäß Fig. 5 einstückig und materialeinheitlich ausgebildet. Der Kanal 7 kann durch die Wahl des Einlaufradius des gekrümmten Hornabschnitts 11 b im Hinblick auf seinen Querschnitt und Länge abgestimmt werden. Dieses Ausführungsbeispiel ist besonders gut geeignet, um eine Tilgung bei hohen Frequenzen einzustellen. Wird der Ring durch ein magnetisierbares Elastomer ersetzt, können besonders hohe Frequenzen eingestellt werden.

Der Elektromagnet 6 wird abhängig von der Motordrehzahl über eine Schalteinrichtung 15 so angesteuert, dass die Fluidmenge im Kanal 7 das Fluid im ersten Raum 4 von der Federanordnung 3 wegzieht. Dadurch entsteht ein Unterdruck im ersten Raum 4 und das Hydrolager verhält sich weicher als die Federanordnung 3 vorgeben würde. Wenn das Hydrolager ausfedert, folgt die Membran 12 angetrieben vom Elektromagneten 6 der Bewegung im Rahmen der Eigenfrequenz des Hydrolagers.

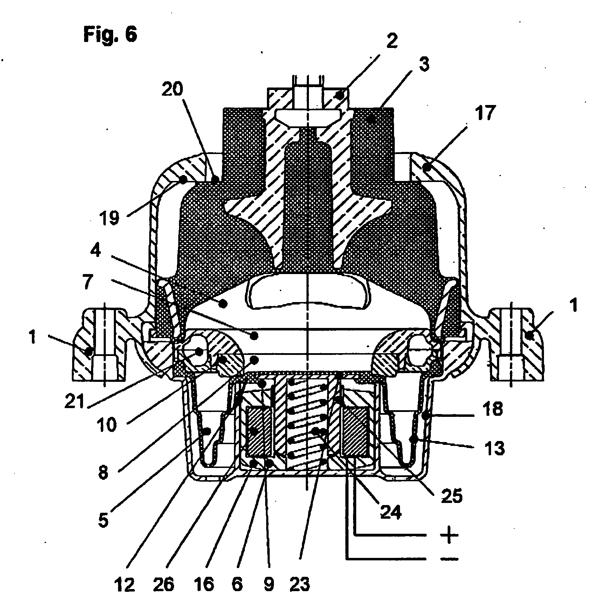

Fig. 6 zeigt ein Hydrolager, welches sich vom Hydrolager gemäß Fig. 5 dadurch unterscheidet, dass in der Membran 12 ein Magnetanker 23 einvulkanisiert ist. Der Magnetanker 23 umgibt eine Spiralfeder 24, welche die Membran 12 gegen das zylindrische Segment 10 drückt. Bei Strombeaufschlagung der Spule 26 wird ein Magnetfeld erzeugt, welches den Magnetanker 23 gegen die Kraft der Spiralfeder 24 in der Zeichnung nach unten zieht und dadurch den Raum 8 vergrößert. Der Magnetanker 23 wird durch eine Gleitführung 25 im Elektromagneten 6 geführt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Hydrolager, umfassend Anschlusselemente (1, 2), welche mittels einer Federanordnung (3) federnd und relativ beweglich zueinander angeordnet sind, mindestens einen mit Fluid gefüllten ersten Raum (4) und zumindest eine teilweise flexible erste Membran (12), welche sich sackartig in mindestens einen weiteren Raum (8) erstreckt, der mit einer Schaltkammer (9) kommuniziert, wobei die Membran (12) durch Magnetkraft bewegbar ist, **dadurch gekennzeichnet, dass** die Membran (12) zumindest teilweise aus einem magnetisierbaren Elastomer gefertigt ist.

2. Hydrolager nach Anspruch 1, **dadurch gekennzeichnet, dass** in die Membran (12) zumindest ein Metallteil (22) zumindest teilweise eingebettet ist.

3. Hydrolager nach Anspruch 2, **dadurch gekennzeichnet, dass** das Metallteil (22) als Magnetanker (23) ausgestaltet ist

4. Hydrolager nach einem der Ansprüche 1 bis 3, **dadurch gekennzeichnet, dass** die Magnetkraft durch eine Spule (26) elektromagnetisch erzeugt ist.

5. Hydrolager nach einem der Ansprüche 1 bis 4, **dadurch gekennzeichnet, dass** die Membran (12) gegen die Kraft einer Feder (23) bewegbar ist.

6. Hydrolager nach einem der Ansprüche 1 bis 5, **dadurch gekennzeichnet, dass** Mittel (10, 11) zur Bildung eines Kanals (7) vorgesehen sind, der als Führung einer Fluidmenge vom ersten Raum (4) in den weiteren Raum (8) fungiert.

7. Hydrolager nach Anspruch 6, **dadurch gekennzeichnet, dass** die Mittel (10,11) konzentrisch zum Kanal (7) angeordnet sind.

8. Hydrolager nach Anspruch 6 oder 7, **dadurch gekennzeichnet, dass** die Mittel (10,11) als zylindrische Segmente (10) ausgebildet sind.

9. Hydrolager nach einem der Ansprüche 6 bis 8, **dadurch gekennzeichnet, dass** die Mittel (10, 11) eine Stützwandung (11) umfassen, an welche die Membran (12) anlegbar ist.

10. Hydrolager nach einem der Ansprüche 1 bis 9, **dadurch gekennzeichnet, dass** die Mittel (10) einen Dämpfungskanal (21) umfassen oder mit einem Dämpfungskanal (21) wirkverbunden sind.

11. Hydrolager nach Anspruch 10, **dadurch gekennzeichnet, dass** der Dämpfungskanal (21) als Doppelstockkanal mit Membranteilung ausgebildet ist.

12. Hydrolager nach einem der Ansprüche 1 bis 11, **dadurch gekennzeichnet, dass** der Kanal (7) koaxial zur Hydrolagerachse angeordnet ist.

13. Hydrolager nach einem der Ansprüche 1 bis 12, **dadurch gekennzeichnet, dass** der Kanal (7) eine Tiefe aufweist, die größer ist als dessen Breite.

14. Hydrolager nach einem der Ansprüche 1 bis 12, **dadurch gekennzeichnet, dass** der Kanal (7) eine Breite aufweist, die größer ist als dessen Tiefe.

15. Hydrolager nach einem der Ansprüche 1 bis 14, **dadurch gekennzeichnet dass** dem Kanal (7) ein hornartiger Einlaufbereich (11 b) zugeordnet ist.

16. Hydrolager nach einem der Ansprüche 1 bis 15, **dadurch gekennzeichnet, dass** die Federanordnung ein Elastomer (3) umfasst, welches den ersten Raum (4) begrenzt.

17. Hydrolager nach einem der Ansprüche 1 bis 16, **dadurch gekennzeichnet, dass** sich an den ersten Raum (4) ein zweiter mit Fluid befüllter Raum (5) anschließt.

18. Hydrolager nach Anspruch 17, **dadurch gekennzeichnet, dass** der zweite Raum (5) durch eine zweite zumindest teilweise flexible Membran (13) begrenzt ist.

19. Hydrolager nach Anspruch 18, **dadurch gekennzeichnet, dass** die erste Membran (12) und die zweite Membran (13) einstückig ausgebildet sind.

20. Hydrolager nach einem der Ansprüche 1 bis 19, **gekennzeichnet durch** eine elektronische Schalteinrichtung (15), **durch** weiche vier Betriebszustände des Hydrolagers einstellbar sind.

## Claims

1. Hydraulic mount, comprising connection elements (1, 2) which are arranged elastically and so as to be movable relative to one another by means of a spring arrangement (3), at least one first space (4) filled with fluid, and at least one partly flexible first diaphragm (12) which extends in a sack-like manner into at least one further space (8) which communicates with a control chamber (9), wherein the diaphragm (12) can be moved by magnetic force, **characterized in that** the diaphragm (12) is produced at least partly from a magnetizable elastomer.

2. Hydraulic mount according to Claim 1, **characterized in that** at least one metal part (22) is at least partly embedded in the diaphragm (12).

3. Hydraulic mount according to Claim 2, **characterized in that** the metal part (22) is designed as a magnet armature (23).

4. Hydraulic mount according to one of Claims 1 to 3, **characterized in that** the magnetic force is electromagnetically produced by a coil (26).

5. Hydraulic mount according to one of Claims 1 to 4, **characterized in that** the diaphragm (12) can be moved against the force of a spring (23).

6. Hydraulic mount according to one of Claims 1 to 5, **characterized in that** means (10, 11) are provided for forming a passage (7) which serves to direct a fluid quantity from the first space (4) into the further space (8).

7. Hydraulic mount according to Claim 6, **characterized in that** the means (10, 11) are arranged concentrically to the passage (7).

8. Hydraulic mount according to Claim 6 or 7, **characterized in that** the means (10, 11) are designed as cylindrical segments (10).

9. Hydraulic mount according to one of Claims 6 to 8, **characterized in that** the means (10, 11) comprise a supporting wall (11), against which the diaphragm (12) can be placed.

10. Hydraulic mount according to one of Claims 1 to 9, **characterized in that** the means (10) comprise a damping passage (21) or are operatively connected to a damping passage (21).

11. Hydraulic mount according to Claim 10, **characterized in that** the damping passage (21) is designed as a double-deck passage with diaphragm division.

12. Hydraulic mount according to one of Claims 1 to 11, **characterized in that** the passage (7) is arranged coaxially to the hydraulic mount axis.

13. Hydraulic mount according to one of Claims 1 to 12, **characterized in that** the passage (7) has a depth which is greater than its width.

14. Hydraulic mount according to Claims 1 to 12, **characterized in that** the passage (7) has a width which is greater than its depth.

15. Hydraulic mount according to one of Claims 1 to 14, **characterized in that** a horn-like inlet region (11b) is assigned to the passage (7).

16. Hydraulic mount according to one of Claims 1 to 15, **characterized in that** the spring arrangement comprises an elastomer (3) which defines the first space (4).

17. Hydraulic mount according to one of Claims 1 to 16, **characterized in that** a second space (5) filled with fluid adjoins the first space (4).

18. Hydraulic mount according to Claim 17, **characterized in that** the second space (5) is defined by a second at least partly flexible diaphragm (13).

19. Hydraulic mount according to Claim 18, **characterized in that** the first diaphragm (12) and the second diaphragm (13) are designed in one piece.

20. Hydraulic mount according to one of Claims 1 to 19, **characterized by** an electronic control device (15), by means of which four operating states of the hydraulic mount can be set.

## Revendications

1. Support hydraulique comprenant des éléments de raccordement (1, 2) qui sont disposés au moyen d'un agencement de ressort (3) de manière élastique et relativement mobile l'un par rapport à l'autre, au moins un premier espace (4) rempli de fluide et au moins une première membrane (12) partiellement flexible qui s'étend en forme de sac dans au moins un autre espace (8), qui communique avec une chambre de commande (9), la membrane (12) pouvant être déplacée par une force magnétique, **caractérisé en ce que** la membrane (12) est fabriquée au moins en partie en un élastomère magnétisable.

2. Support hydraulique selon la revendication 1, **caractérisé en ce qu'**au moins une partie métallique (22) peut être au moins en partie noyée dans la membrane (12).

3. Support hydraulique selon la revendication 2, **caractérisé en ce que** la partie métallique (22) est réalisée sous forme d'armature magnétique (23).

4. Support hydraulique selon l'une quelconque des revendications 1 à 3, **caractérisé en ce que** la force magnétique est produite électromagnétiquement par une bobine (26).

5. Support hydraulique selon l'une quelconque des revendications 1 à 4, **caractérisé en ce que** la membrane (12) peut être déplacée à l'encontre de la force d'un ressort (23).

6. Support hydraulique selon l'une quelconque des revendications 1 à 5, **caractérisé en ce que** des moyens (10, 11) pour former un canal (7) sont prévus, ce canal servant à guider une quantité de fluide du premier espace (4) dans l'autre espace (8).

7. Support hydraulique selon la revendication 6, **caractérisé en ce que** les moyens (10, 11) sont disposés concentriquement au canal (7).

8. Support hydraulique selon la revendication 6 ou 7, **caractérisé en ce que** les moyens (10, 11) sont réalisés sous forme de segments cylindriques (10).

9. Support hydraulique selon l'une quelconque des revendications 6 à 8, **caractérisé en ce que** les moyens (10, 11) comprennent une paroi de support (11) contre laquelle la membrane (12) peut s'appliquer.

10. Support hydraulique selon l'une quelconque des revendications 1 à 9, **caractérisé en ce que** les moyens (10) comprennent un canal d'amortissement (21) ou sont en liaison coopérante avec un canal d'amortissement (21).

11. Support hydraulique selon la revendication 10, **caractérisé en ce que** le canal d'amortissement (21) est réalisé sous la forme d'un canal à deux niveaux avec une division par membrane.

12. Support hydraulique selon l'une quelconque des revendications 1 à 11, **caractérisé en ce que** le canal (7) est disposé coaxialement à l'axe du support hydraulique.

13. Support hydraulique selon l'une quelconque des revendications 1 à 12, **caractérisé en ce que** le canal (7) présente une profondeur qui est supérieure à sa largeur.

14. Support hydraulique selon l'une quelconque des revendications 1 à 12, **caractérisé en ce que** le canal (7) présente une largeur qui est supérieure à sa profondeur.

15. Support hydraulique selon l'une quelconque des revendications 1 à 14, **caractérisé en ce que** l'on associe au canal (7) une région d'entrée (11b) en forme de cornet.

16. Support hydraulique selon l'une quelconque des revendications 1 à 15, **caractérisé en ce que** l'agencement de ressort comprend un élastomère (3) qui délimite le premier espace (4).

17. Support hydraulique selon l'une quelconque des revendications 1 à 16, **caractérisé en ce qu'**un deuxième espace (5) rempli de fluide se raccorde au premier espace (4).

18. Support hydraulique selon la revendication 17, **caractérisé en ce que** le deuxième espace (5) est limité par une deuxième membrane (13) au moins partiellement flexible.

19. Support hydraulique selon la revendication 18, **caractérisé en ce que** la première membrane (12) et la deuxième membrane (13) sont réalisées d'une seule pièce.

20. Support hydraulique selon l'une quelconque des revendications 1 à 19, **caractérisé par** un dispositif de commande électronique (15), qui permet d'ajuster quatre états de fonctionnement du support hydraulique.
